# FASCICULE DE BREVET EUROPEEN

(11) **EP 3 123 059 B1**
(45) Date de publication et mention de la délivrance du brevet: **20.12.2017**
(21) Numéro de dépôt: 15714878.4
(22) Date de dépôt: 19.03.2015
(51) Int. Cl.: F16H 57/04, F01D 25/18, F02C 7/36

(54) **ENSEMBLE DE TRANSMISSION COMPRENANT UN ORGANE DE TRANSMISSION ET UN SYSTEME DE DISTRIBUTION D'HUILE.**
GETRIEBEANORDNUNG MIT EINEM GETRIEBEELEMENT UND EINEM ÖLVERTEILUNGSSYSTEM
TRANSMISSION ASSEMBLY INCLUDING A TRANSMISSION MEMBER AND AN OIL DISTRIBUTION SYSTEM

(30) Priorité: 24.03.2014 FR 1452462
(43) Date de publication de la demande: 01.02.2017
(73) Titulaire: SAFRAN AIRCRAFT ENGINES, 75015 Paris (FR)
(72) Inventeur: CURLIER, Augustin, F-77550 Moissy-cramayel Cedex (FR); KRID, Yassine, F-77550 Moissy-cramayel Cedex (FR)
(74) Mandataire: Joanny, Damien Henri Xavier
(86) Numéro de dépôt international: PCT/FR2015/050669
(87) Numéro de publication internationale: WO 2015/145029

(56) Documents cités:
- EP-A1- 2 559 913
- FR-A1- 2 987 402
- FR-A1- 2 987 417
- GB-A- 2 209 371
- JP-U- S5 867 161
- US-A1- 2012 157 256

## Description

### DOMAINE DE L'INVENTION

Le présent exposé concerne un ensemble de transmission comprenant un organe de transmission et un système de distribution d'huile permettant de fournir de l'huile à l'organe de transmission afin d'assurer sa lubrification.

Un tel ensemble de transmission peut notamment être utilisé dans le domaine aéronautique, au sein de turboréacteurs d'avions ou de turbomoteurs d'hélicoptères pour ne citer que ces exemples.

### ETAT DE LA TECHNIQUE ANTERIEURE

Les turboréacteurs classiquement rencontrés aujourd'hui dans le domaine de l'aviation civile sont des turboréacteurs double corps à double flux. Toutefois, en raison des contraintes toujours plus importantes sur les coûts d'exploitation, étroitement liés au coût des carburants, aujourd'hui très élevé, de nouveaux projets de turboréacteurs bénéficiant d'une plus faible consommation spécifique ont été proposés.

Une option prometteuse consiste à équiper le turboréacteur d'un réducteur de vitesse intercalé entre le compresseur basse-pression et la soufflante : de cette manière, il est possible d'augmenter la vitesse de rotation du corps basse-pression, augmentant ainsi le rendement global du turboréacteur, tout en réduisant la vitesse de la soufflante, ce qui permet d'augmenter le diamètre de la soufflante, et donc le taux de dilution du moteur (bypass ratio), en conservant une vitesse périphérique en bout de pale acceptable pour limiter la survenance de perturbations aérodynamiques génératrices notamment de bruit.

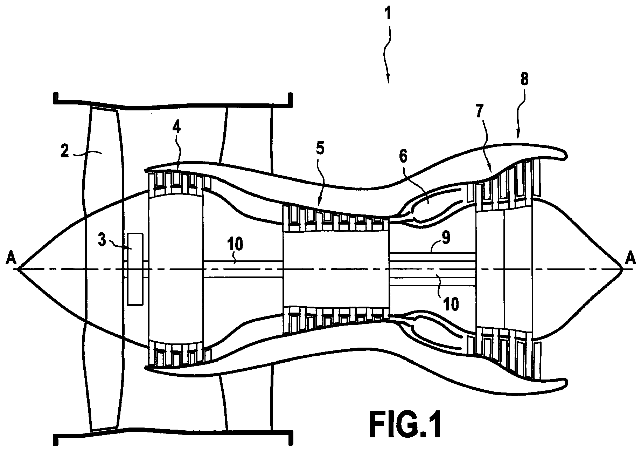

Un tel turboréacteur à double flux à réducteur est représenté à la FIG 1, en coupe selon un plan vertical passant par son axe principal A. Il comporte, d'amont en aval, une soufflante 2, un réducteur 3, un compresseur basse pression 4, un compresseur haute pression 5, une chambre de combustion 6, une turbine haute pression 7 et une turbine basse pression 8.

Dans un tel turboréacteur à réducteur 1, la turbine haute pression 7 entraîne le compresseur haute pression 5 à l'aide d'un arbre haute pression 9. La turbine basse pression 8, également appelée turbine rapide, entraîne quant à elle le compresseur basse pression 4, également appelé compresseur rapide, à l'aide d'un arbre basse pression 10. La turbine rapide 8 entraîne également la soufflante 2 par l'intermédiaire du réducteur de vitesse 3. De cette manière, la soufflante 2 peut être entraînée à vitesse réduite, ce qui est favorable du point de vue aérodynamique, tandis que le compresseur basse pression 4 peut être entraîné à vitesse plus importante, ce qui est favorable d'un point de vue thermodynamique.

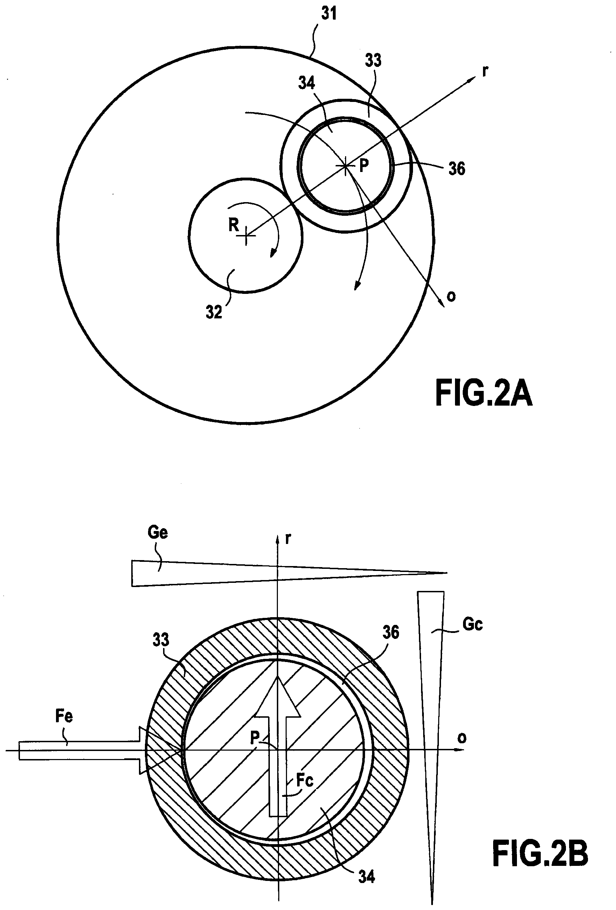

Comme cela est représenté sur la FIG 2A, ce réducteur 3 peut être un train épicycloïdal muni d'une couronne 31, d'un pignon planétaire 32, et de pignons satellites 33 (un seul pignon satellite 33 est représenté sur cette figure à fins de simplification). Les pignons satellites 33 sont montés en rotation sur des fusées 34 d'un porte-satellite: chaque pignon satellite 33 pivote donc autour de l'axe de pivotement P de sa fusée 34 respective. Les paliers 36 entre les pignons satellites 33 et leurs fusées respectives 34 peuvent être lisses, c'est-à-dire dépourvu de mécanisme de roulement, et comprennent alors un film d'huile sous pression permettant la lubrification et le refroidissement des paliers 36. Un exemple de système de distribution d'huile est donné dans la demande de brevet français déposée sous le numéro 13 58581.

Dans une configuration classique, la couronne 31 est fixée au carter 40, le porte-satellite 35 est accouplé à l'arbre de soufflante 2a , entrainant la soufflante 2, et le pignon planétaire 32 est accouplé à une extrémité 10a de l'arbre basse pression 10.

Lors du fonctionnement du turbomoteur, en raison de la rotation du pignon planétaire 33 et du blocage de la couronne 31, les pignons satellites 33 sont entraînés dans une course superposant une rotation autour de l'axe de rotation R du train épicycloïdal et un pivotement autour de l'axe P de leurs fusées respectives 34 : dès lors, les fusées 34 et le porte-satellite 35 tout entier sont entrainés en rotation autour de l'axe de rotation R du train épicycloïdal.

La FIG 2B illustre alors schématiquement les forces qui s'exercent sur le film d'huile présent dans l'interstice du palier 36 d'un tel pignon satellite 32 dans un cas conventionnel. D'une part, le pignon satellite 33 exerce une force d'entraînement Fe sur le film d'huile qui est retransmise à la fusée 34 et qui tend à entraîner le porte-satellite en rotation autour de l'axe de rotation R : dans le repère tournant [r, o, P] lié à la fusée 34, cette force d'entraînement Fe est orthoradiale. Cette force d'entraînement génère un pincement du film d'huile en arrière de la fusée 34 suivant la direction orthoradiale, ce qui provoque une surpression dans cette zone de pincement et conduit à l'apparition dans le film d'huile d'un gradient d'entraînement Ge orthoradial croissant vers l'arrière.

D'autre part, en raison de la rotation de la fusée 34 autour de l'axe de rotation R, le film d'huile dans l'interstice 36 est soumis à une force centrifuge Fc qui est proportionnelle au carré de la vitesse de rotation autour de l'axe de rotation R et dirigée radialement dans le repère tournant [r, o, P] lié à la fusée 34. Les forces volumiques centrifuges génèrent alors au sein du film d'huile un gradient centrifuge Gc radial croissant vers l'extérieur.

Enfin, la force de pesanteur s'exerce également sur le film d'huile mais son influence est négligeable par rapport aux forces d'entrainement Fe et centrifuge Fc lors du fonctionnement du réducteur.

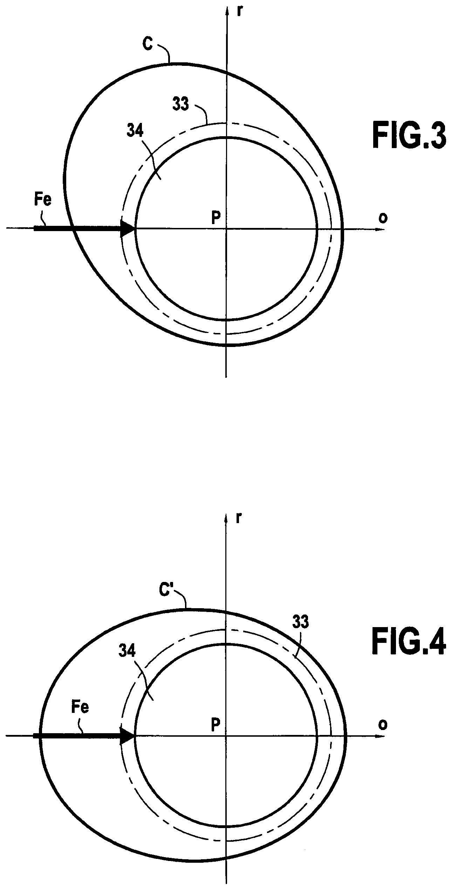

Dans un tel cas conventionnel, le gradient d'entrainement et le gradient centrifuge se superposent pour donner une distribution du champ de pression représenté schématiquement sur la FIG 3. Sur un tel graphe, pour une coordonnée angulaire donnée, plus la courbe C est éloignée du centre du repère, plus la pression régnant dans le tronçon d'interstice considéré est élevée.

On constate ainsi que le champ de pression C est déséquilibré par rapport à la direction d'entraînement orthoradiale. Dès lors, d'une part, la transmission des efforts d'entraînement depuis le pignon satellite 33 vers la fusée 34 s'en trouve dégradée ; d'autre part, ceci augmente le risque que le pignon satellite 33 n'entre en contact avec sa fusée 34 et n'endommage ainsi le palier.

Pour remédier à ce phénomène, des ensembles réducteurs ont été proposés dans lesquels le porte-satellite est l'organe du réducteur qui est lié au carter : dès lors, aucune force centrifuge ne s'applique sur le film d'huile du palier des pignons satellites. Toutefois, cette configuration dans laquelle c'est le porte-satellite plutôt que la couronne du réducteur qui est lié au carter impose une plage de rapports de réduction qui ne convient pas à certains modèles de turbomoteurs.

Il existe donc un réel besoin pour un ensemble de transmission qui soit dépourvu, au moins en partie, des inconvénients inhérents aux configurations connues précitées.

### PRESENTATION DE L'INVENTION

Le présent exposé concerne un ensemble de transmission selon la revendication 1 comprenant un organe de transmission et un système de distribution d'huile logés dans un carter muni d'au moins une alimentation en huile, dans lequel l'organe de transmission comprend au moins un pivot tournant, apte à tourner autour d'un axe de rotation, et une partie pivotante, apte à pivoter autour du pivot tournant, dans lequel le système de distribution d'huile est configuré pour recevoir de l'huile sous pression depuis l'alimentation en huile et pour la transférer à au moins une chambre de réception d'huile du pivot tournant, dans lequel ledit pivot tournant comprend des orifices d'injection mettant en communication fluidique la chambre de réception d'huile avec l'interstice séparant le pivot tournant et la partie pivotante de manière à former un palier fluide, et dans lequel l'ensemble de transmission est apte à injecter de l'huile dans ledit interstice à une première pression d'injection au niveau d'une portion extérieure de l'interstice dirigée à l'opposé de l'axe de rotation, et à une deuxième pression d'injection au niveau d'une portion intérieure de l'interstice dirigée vers l'axe de rotation, la deuxième pression d'injection étant différente de la première pression d'injection.

Dans un tel palier fluide, en raison de la rotation du pivot tournant autour de l'axe de rotation, le film d'huile dans l'interstice est soumis à des forces volumiques centrifuges qui génèrent un gradient de pression centrifuge dans lequel la pression de l'huile située dans la portion extérieure de l'interstice, donc à une distance radiale plus importante de l'axe de rotation, est plus importante que la pression de l'huile située dans la portion intérieure de l'interstice, donc à une distance radiale moins importante de l'axe de rotation.

Grâce au présent ensemble de transmission, permettant d'injecter de l'huile à des pressions différentes dans les portions intérieure et extérieure de l'interstice, il possible d'introduire un différentiel de pression d'injection dans le film d'huile du palier fluide pour compenser, au moins en partie, le gradient de pression centrifuge. Chacune de ces pressions restent toutefois supérieures à la pression atmosphérique.

Ainsi, grâce à cet ensemble de transmission, il est possible de régler, au moins en partie, la distribution du champ de pression dans le film d'huile afin de mieux contrôler la position de la partie pivotante autour du pivot tournant. Tout d'abord, ceci permet de réduire le risque de contact entre la partie pivotante et le pivot tournant et, ainsi, de réduire l'usure de l'organe de transmission. De plus, ceci peut permettre d'améliorer la symétrie du champ de pression autour de la direction d'entraînement selon laquelle s'applique la force d'entraînement exercée par la partie pivotante sur le pivot tournant, ou vive versa, améliorant ainsi l'efficacité du transfert énergétique entre ces deux organes et donc les performances générales de l'organe de transmission.

Dans le présent exposé, les termes « axial », « radial », « tangentiel », « intérieur », « extérieur » et leurs dérivés sont définis par rapport à l'axe principal de l'ensemble de transmission ; le terme « orthoradial » est défini par rapport à un tel axe radial. On entend en outre par « portion intérieure de l'interstice » une portion de l'interstice, dont l'amplitude angulaire est comprise entre 10 et 180°, de préférence entre 10 et 90°, qui s'étend symétriquement de part et d'autre du plan radial passant par l'axe de rotation et l'axe du pivot tournant et qui est située dans le demi-espace intérieur défini par le plan orthoradial perpendiculaire audit plan radial et passant par l'axe du pivot tournant. On entend par « portion extérieure de l'interstice » la portion de l'interstice correspondante dans le demi-espace extérieur défini par ce plan orthoradial.

Dans certains modes de réalisation, la deuxième pression d'injection est supérieure à la première pression d'injection. On introduit ainsi un différentiel de pression d'injection centripète permettant de compenser, au moins en partie, le gradient de pression centrifuge généré par les forces volumiques centrifuges.

Dans certains modes de réalisation, l'ensemble de transmission comprend une première circulation d'huile débouchant par au moins un premier orifice d'injection au niveau de la portion extérieure de l'interstice, et une deuxième circulation d'huile, distincte de la première circulation d'huile, débouchant par au moins un deuxième orifice d'injection au niveau de la portion intérieure de l'interstice. Du fait de l'indépendance des première et deuxième circulations d'huile, il est possible de régler indépendamment les paramètres d'injection, et notamment la pression d'injection, de l'huile dans la portion extérieure de l'interstice d'une part, et dans la portion intérieure de l'interstice d'autre part.

Dans certains modes de réalisation, le dispositif de transmission comprend en outre un calculateur configuré pour régler la pression de la première et/ou de la deuxième circulation de fluide en fonction de la vitesse de rotation du pivot tournant autour de l'axe de rotation. La force centrifuge s'exerçant sur le film d'huile, et donc l'amplitude du gradient de pression centrifuge, croit avec la vitesse de rotation du pivot tournant autour de l'axe de rotation : un tel calculateur permet alors de compenser cette augmentation en augmentant également le différentiel de pression d'injection. Cette différence de pression d'injection pourra donc être nulle lorsque la vitesse de rotation du pivot tournant est nulle et augmenter lorsque cette vitesse augmente.

Dans certains modes de réalisation, l'ensemble de transmission comprend un dispositif de mesure de la vitesse de rotation du pivot tournant autour de l'axe de rotation.

Dans certains modes de réalisation, ce dispositif de mesure comprend une roue phonique.

Dans certains modes de réalisation, le calculateur est configuré pour suivre une loi de pilotage selon laquelle la différence de pression entre les première et deuxième pressions d'injection compense au moins à 70% la différence de pression de l'huile entre les portions intérieure et extérieure de l'interstice causée par les forces volumiques centrifuges lors de la rotation du pivot tournant. De cette manière, on parvient à rapprocher de manière sensible la distribution du champ de pression de la situation idéale selon laquelle le champ de pression est symétrique par rapport à la direction d'entraînement. La performance de l'organe de transmission est ainsi grandement améliorée.

Dans certains modes de réalisation, le calculateur est configuré pour suivre une loi de pilotage selon laquelle la différence de pression entre les première et deuxième pressions permet de garantir une épaisseur du film d'huile au moins 1,5 fois supérieur à la rugosité équivalente quadratique (au sens de la moyenne) des corps du palier.

Dans certains modes de réalisation, l'ensemble comprend une première alimentation en huile, mise sous pression par une première pompe et alimentant la première circulation d'huile, et une deuxième alimentation en huile, mise sous pression par une deuxième pompe et alimentant la deuxième circulation d'huile. Grâce à ces alimentations indépendantes, il est possible de régler les paramètres propres à chaque circulation d'huile en amont, simplifiant ainsi la configuration du système de distribution. Les deux pompes peuvent notamment régler indépendamment la pression de chacune des circulations d'huile.

Dans certains modes de réalisation, le système de distribution d'huile comprend une partie tournante comportant une première chambre de transfert d'huile munie d'au moins un premier orifice d'alimentation configurée pour recevoir de l'huile depuis la première alimentation en huile, et une deuxième chambre de transfert d'huile munie d'au moins un deuxième orifice d'alimentation configurée pour recevoir de l'huile depuis la deuxième alimentation en huile.

Dans certains modes de réalisation, le pivot tournant comprend une première chambre de réception d'huile, en communication fluidique avec la portion extérieure de l'interstice par ledit au moins un premier orifice d'injection, et une deuxième chambre de réception d'huile, en communication fluidique avec la portion intérieure de l'interstice par ledit au moins un deuxième orifice d'injection.

Dans certains modes de réalisation, l'ensemble comprend en outre un premier conduit de liaison mettant en communication fluidique la première chambre de transfert d'huile et la première chambre de réception d'huile, et un deuxième conduit de liaison mettant en communication fluidique la deuxième chambre de transfert d'huile et la deuxième chambre de réception d'huile.

Dans certains modes de réalisation, les premier et deuxième conduits de liaison sont indépendants.

Dans d'autres modes de réalisation, les premier et deuxième conduits de liaison font partie d'une même pièce munie de deux canaux.

Dans certains modes de réalisation, le système de distribution d'huile est entrainé solidairement en rotation avec le pivot tournant de l'organe de transmission.

Dans le présent exposé, on entend par « le système de distribution d'huile est entrainé solidairement en rotation avec le pivot tournant de l'organe de transmission» le fait que le système de distribution d'huile tourne autour de l'axe de rotation sensiblement à la même vitesse, et en tout état de cause en moyenne à la même vitesse, que le pivot tournant de l'organe de transmission avec un déphasage restant sensiblement nul, et en tout état de cause nul en moyenne, de telle sorte qu'un point donné du système de distribution d'huile fasse toujours sensiblement face à la même zone du pivot tournant de l'organe de transmission. Cette définition tolère donc de petites différences de vitesse transitoires ou de petits déphasages transitoires dues à des vibrations parasites ou en cas d'accélération ou de décélération du pivot tournant de l'organe de transmission par exemple.

Dans certains modes de réalisation, au moins une chambre de transfert d'huile du système de distribution d'huile s'étend sur un secteur angulaire strictement inférieur à 360°. De cette manière, la chambre de transfert d'huile n'est pas continue sur le tour complet du système de distribution d'huile, ce qui empêche l'huile de tourner au sein de la chambre de transfert d'huile et limite ainsi l'impact des mouvements de l'huile sur la dynamique d'ensemble du système de distribution d'huile. De cette manière, l'huile se situe dans le même repère que le système de distribution.

Dans certains modes de réalisation, le système de distribution d'huile est connecté au pivot tournant de l'organe de transmission à l'aide d'au moins un dispositif d'entraînement en rotation comprenant un amortisseur. Ce dispositif d'entraînement en rotation muni de cet amortisseur permet d'entraîner le système de distribution d'huile en rotation en limitant la transmission des mouvements parasites de l'organe de transmission au système de distribution d'huile. Des modes de réalisation de tels dispositifs d'entrainement sont décrits dans la demande de brevet français déposée sous le numéro 13 58581.

Dans certains modes de réalisation, le pivot tournant comprend une pluralité de premiers orifices d'injection disposés symétriquement de part et d'autre du plan passant par l'axe du pivot tournant et par l'axe de rotation du pivot tournant.

Dans certains modes de réalisation, le pivot tournant comprend une pluralité de deuxièmes orifices d'injection disposés symétriquement de part et d'autre du plan passant par l'axe du pivot tournant et par l'axe de rotation du pivot tournant. De cette manière, la distribution d'injection est symétrique par rapport à la direction radiale du repère tournant, ce qui est mieux adapté pour compenser le gradient centrifuge, lui aussi symétrique par rapport à cette direction radiale.

Dans certains modes de réalisation, le pivot tournant comprend un nombre pair de premiers orifices d'injection.

Dans certains modes de réalisation, le pivot tournant comprend un nombre pair de deuxièmes orifices d'injection. Il est préférable en effet de ne pas injecter d'huile sur la direction radiale du repère tournant, que ce soit vers l'axe de rotation ou à son opposé.

Dans certains modes de réalisation, le pivot tournant comprend au moins un groupe de deux premiers orifices d'injection séparés d'un angle compris entre 10° et 160°, de préférence entre 60° et 120°, de préférence encore égal à 90° ±5°par rapport à l'axe du pivot tournant.

Dans certains modes de réalisation, le pivot tournant comprend au moins un groupe de deux deuxièmes orifices d'injection séparés d'un angle compris entre 10° et 160°, de préférence entre 60° et 120°, de préférence encore égal à 90° ±5° par rapport à l'axe du pivot tournant.

Dans certains modes de réalisation, le pivot tournant comprend une pluralité de groupes de premiers orifices d'injection, de préférence deux groupes.

Dans certains modes de réalisation, le pivot tournant comprend une pluralité de groupes de deuxièmes orifices d'injection, de préférence deux groupes.

Dans certains modes de réalisation, les premiers orifices d'injection sont prévus symétriquement par rapport aux deuxièmes orifices d'injection.

Dans certains modes de réalisation, le pivot tournant comprend des orifices d'injection possédant des sections de passage différentes. Ceci permet de générer des pertes de charge différentes lors de l'injection et donc de régler des pressions d'injection différentes. C'est un moyen alternatif ou complémentaire pour générer le différentiel de pression d'injection dans le film d'huile de l'interstice. En particulier, dans un tel cas, il est possible de prévoir une unique circulation d'huile alimentant des orifices d'injection présentant des sections de passages plus importantes au niveau de la portion intérieure de l'interstice plutôt qu'au niveau de sa portion extérieure.

Dans certains modes de réalisation, le palier entre la partie pivotante et le pivot tournant est dépourvu de dispositif de roulement.

Dans certains modes de réalisation, l'organe de transmission est un réducteur de vitesse.

Dans certains modes de réalisation, l'organe de transmission est du type train épicycloïdal comportant un porte-satellite.

Dans certains modes de réalisation, le porte-satellite possède une pluralité de fusées, formant pivots tournants, portant chacune un pignon satellite, formant partie pivotante. Le gradient de pression centrifuge peut ainsi être compensé, au moins en partie, dans les paliers de chacun des pignons satellites du train épicycloïdal.

Le présent exposé concerne également une turbomachine comprenant un ensemble de transmission selon l'un quelconque des modes de réalisation précédents.

Dans certains modes de réalisation, la turbomachine comporte en outre une turbine basse pression et une soufflante, et le train épicycloïdal comporte en outre un pignon planétaire et une couronne.

Dans certains modes de réalisation, la couronne est fixée au carter, de préférence à l'aide d'une liaison souple, le pignon planétaire est accouplé avec la turbine basse pression, de préférence à l'aide d'une liaison souple, et le porte-satellite est accouplé avec la soufflante, de préférence à l'aide d'une liaison raide. On entend par « liaison souple », une liaison plus souple en flexion que la liaison dite « raide ».

Les caractéristiques et avantages précités, ainsi que d'autres, apparaîtront à la lecture de la description détaillée qui suit, d'exemples de réalisation du dispositif et du procédé proposés. Cette description détaillée fait référence aux dessins annexés.

### BREVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence.
La FIG 1 est une vue en coupe axiale d'un exemple de turbomachine à réducteur.
La FIG 2A est un schéma de la course du pignon satellite ; la FIG 2B est un schéma illustrant les forces s'exerçant sur le palier du pignon satellite.
La FIG 3 est un graphe illustrant schématiquement la distribution du champ de pression dans le palier en l'absence de compensation.
La FIG 4 est un graphe illustrant schématiquement la distribution idéale du champ de pression dans le palier.
La FIG 5 est un schéma de principe de l'ensemble de transmission.
La FIG 6 est une vue en coupe du système de distribution d'huile.
La FIG 7 est une vue en coupe transversale d'une fusée.

### DESCRIPTION DETAILLEE D'EXEMPLE(S) DE REALISATION

Afin de rendre plus concrète l'invention, un exemple d'ensemble de transmission est décrit en détail ci-après, en référence aux dessins annexés. Il est rappelé que l'invention ne se limite pas à cet exemple.

La FIG 1 représente un turboréacteur à double flux à réducteur tel que décrit à titre introductif comportant un ensemble de transmission 3 selon l'invention.

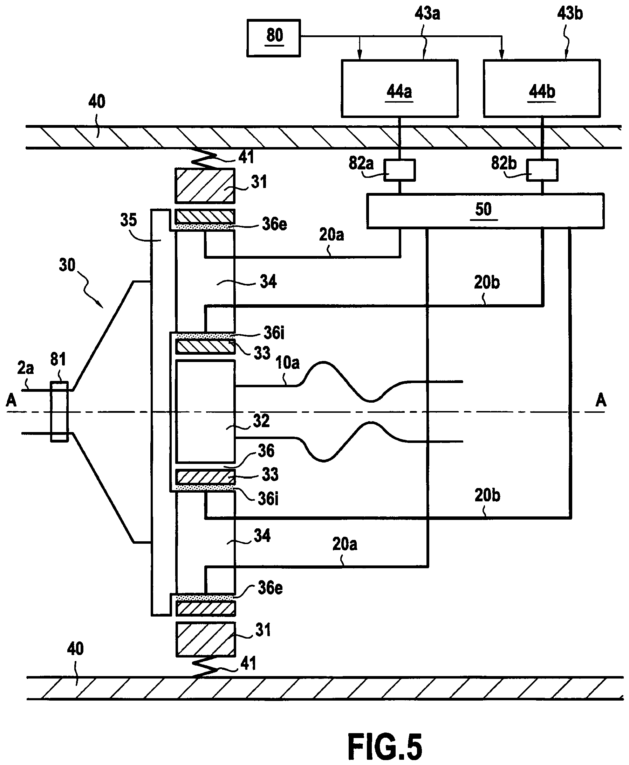

Cet ensemble de transmission 3 comprend un train épicycloïdal 30 analogue à celui qui a été décrit à titre introductif en référence à la FIG 2A. L'ensemble de transmission 3 selon l'invention est également représenté sur la FIG 5.

On note en particulier que, dans cet exemple, la couronne 31 est fixée au carter 40 par des viroles souples 41, le porte-satellite 35 est accouplé à l'arbre de soufflante 2a, entrainant la soufflante 2, par une liaison raide, et que le pignon planétaire 32 est accouplé de manière souple à une extrémité cannelée 10a de l'arbre basse pression 10.

Dans cet exemple selon l'invention, les fusées 34 des pignons satellites 33 comportent chacune une première chambre de réception d'huile 37a et une deuxième chambre de réception d'huile 37b connectées fluidiquement à la portion extérieure 36e de l'interstice 36 formant le palier, respectivement à la portion intérieure 36i de l'interstice 36 du palier, par des canaux traversant la fusée 34 et débouchant par des premiers orifices d'injection 38a, respectivement des deuxième orifices d'injection 38b.

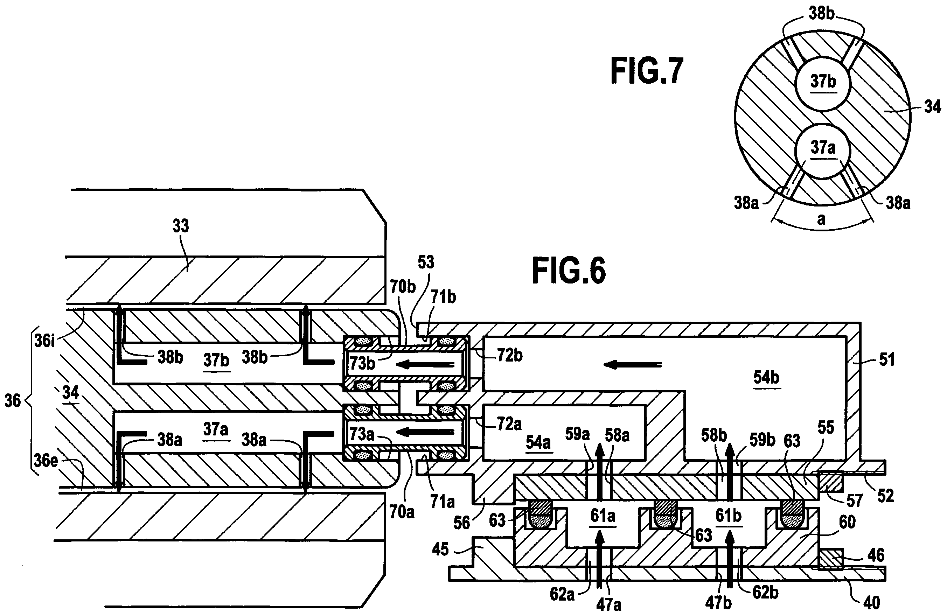

Selon un exemple de répartition des orifices d'injection 38a, 38b autour de la fusée 34, mieux visibles sur les FIG 6 et 7, la fusée 34 comprend une première série de premiers orifices d'injection 38a situés dans un premier plan axial et une deuxième série de premiers orifices d'injection 38a situés dans un deuxième plan axial. En outre, chaque série de premiers orifices 38a comprend deux premiers orifices 38a, prévus symétriquement de part et d'autre du plan radial et écartés d'un angle a d'environ 90°. Dans cet exemple de répartition des orifices d'injection, les deuxièmes orifices d'injection 38b sont prévus selon une configuration analogue mais symétrique aux premiers orifices 38a par rapport au plan orthoradial.

L'ensemble de transmission 3 comprend en outre un système de distribution d'huile 50 assurant la distribution d'huile de lubrification depuis une premier alimentation en huile 43a, fournie par une première pompe 44a, et une deuxième alimentation en huile 43b, fournie par une deuxième pompe 44b, jusqu'aux paliers 36 des pignons satellites 33. Ces deux alimentations 43a, 43b et leurs pompes 44a, 44b sont prévues au stator de l'ensemble de réduction 3.

Le système de distribution 50 va être décrit plus en détails en référence à la FIG 6.

Ce système de distribution d'huile 50 comprend tout d'abord une partie tournante 51 de forme générale annulaire munie d'une paroi extérieure cylindrique 52 et d'une paroi avant 53. La partie tournante comprend une première chambre de transfert d'huile 54a s'étendant en arc de cercle, sur un secteur angulaire inférieur à 360°, à l'intérieur et le long de la portion avant de la paroi extérieure 52 et le long de la majeure partie de la portion extérieure de la paroi avant 53. La partie tournante 51 comprend en outre une deuxième chambre de transfert d'huile 54b dont le profil en coupe transversale forme un L entourant la première chambre de transfert 54a : elle est ainsi contigüe à la portion arrière de la paroi extérieure 52 et à la portion intérieure de la paroi avant 53. La deuxième chambre de transfert 54b s'étend elle aussi sur un secteur angulaire inférieur à 360°, de préférence sur le même secteur angulaire que la première chambre de transfert 54a.

Une frette annulaire 55 est rapportée autour de la paroi extérieure 52 entre un épaulement 56 et un écrou 57. La frette 55 comprend une première série de passages d'admission 58a, respectivement une deuxième série de passages d'admission 58b, prévus en vis-à-vis d'orifices d'admission 59a, respectivement 59b, pratiqués dans la paroi extérieure 52 et débouchant dans la première chambre de transfert 54a, respectivement dans la deuxième chambre de transfert 54b.

Ce système de distribution d'huile 50 comprend ensuite une partie fixe 60, généralement annulaire, montée contre le carter 40 entre un épaulement 45 et un écrou 46. La partie fixe 60 comprend une première cavité annulaire 61a et une deuxième cavité annulaire 61b, toutes deux ouvertes sur leurs côtés radiaux intérieurs en direction de la frette 55 de la partie 51. La première cavité 61a, respectivement la deuxième cavité 61b, comprend sur son côté radial extérieur un orifice 62a, respectivement 62b, qui est prévu en vis-à-vis d'un orifice d'alimentation 47a, respectivement 47b, de la première alimentation en huile 43a, respectivement de la deuxième alimentation en huile 43b.

La partie tournante 51 du système de distribution d'huile 50 est monté sur le porte-satellite 35 par intermédiaire d'une pluralité de dispositifs d'entraînement en rotation (non représenté) pouvant inclure un amortisseur. Des exemples de réalisation de tels dispositifs d'entrainement sont décrits dans la demande de brevet français déposée sous le numéro 13 58581.

La partie tournante 51 est également montée dans le carter 40 en engageant sa frette 55 dans la partie fixe 60 du système de distribution d'huile, fermant ainsi les première et deuxième cavités 61a, 61b. Des joins annulaires 63 sont prévus entre la partie tournante 51 et la frette 55 en avant de la première cavité 61a, entre les première et deuxième cavités 61a, 61b, et en arrière de la deuxième cavité 61b afin d'assurer l'étanchéité de ces cavités 61a et 61b. Ces joints 63 sont de préférence composites et incluent un élément interne du type joint torique de pré-serrage en élastomère et un élément externe du type bague comprenant du PTFE. Un exemple de joint de ce type est le joint Turcon Glyd Ring (marquée déposée).

Afin de transférer l'huile depuis une chambre de transfert 54a, 54b vers les chambres de réception d'huile correspondantes 37a, 37b des fusées 34, la paroi avant 57 de la partie tournante 51 du système de distribution d'huile 50 comprend des premier et deuxième renfoncements 71a, 71b prévus à des emplacements faisant face aux chambres de réception d'huile 37a, 37b des fusées 34 du porte-satellite 35. Ces renfoncements 71a, 71b communiquent chacun fluidiquement avec la chambre de transfert d'huile correspondante 54a, 54b à l'aide d'orifices 72a, 72b.

Chaque fusée 34 du porte-satellite 35 comprend quant à elle des premier et deuxième renfoncements 73a, 73b communiquant fluidiquement avec la chambre de réception d'huile 37.

Pour chaque fusée 34, un premier conduit de liaison 70a, respectivement un deuxième conduit de liaison 70b, est monté flottant, d'une part, entre les parois latérales du premier renfoncement 73a, respectivement du deuxième renfoncement 73b, de la fusée 34 et, d'autre part, entre les parois latérales du premier renfoncement 71a, respectivement du deuxième renfoncement 71b, de la partie tournante 51 du système de distribution d'huile 50 situé en vis-à-vis, permettant ainsi de connecter fluidiquement les chambres de réception d'huile 37a, 37b de cette fusée 34 à leur chambre de distribution d'huile respective 54a, 54b.

Ainsi, l'ensemble réducteur 3 est muni de deux circulations d'huile distinctes 20a et 20b. Dans la première circulation d'huile 20a, l'huile est alimentée par la première pompe 44a et pénètre par les orifices 47a et 62a dans la première cavité annulaire 61a de la partie fixe 60 du système de distribution d'huile 50 dans laquelle elle se répand à 360° ; l'huile traverse alors les passages 58a, 59a pour remplir à son tour la première chambre de transfert d'huile 54a ; l'huile peut alors être distribuée par l'intermédiaire des premiers conduits de liaison 70a aux premières chambres de réception d'huile 37a des fusées 34 à partir desquelles elle sera acheminée jusqu'à la portion extérieure 36e des paliers 36 via les premiers orifices d'injection 38a. La première circulation d'huile 20a est donc continue depuis la première pompe 44a de la première alimentation en huile 43a jusqu'aux premiers orifices d'injection 38a. On comprend ainsi naturellement que, dans la mesure où cette première circulation d'huile ne possède aucune interruption, notamment à l'interface entre le rotor et le stator, la première circulation d'huile 20a reste sous pression jusqu'aux orifices d'injection 38a, cette pression d'injection restant sensiblement la même que celle imposée par la première pompe 44a aux pertes de charge près.

De manière analogue, dans la deuxième circulation d'huile 20b, l'huile est alimentée par la deuxième pompe 44b et pénètre par les orifices 47b et 62b dans la deuxième cavité annulaire 61b de la partie fixe 60 du système de distribution d'huile 50 dans laquelle elle se répand à 360° ; l'huile traverse alors les passages 58b, 59b pour remplir à son tour la deuxième chambre de transfert d'huile 54b ; l'huile peut alors être distribuée par l'intermédiaire des deuxièmes conduits de liaison 70b aux deuxièmes chambres de réception d'huile 37b des fusées 34 à partir desquelles elle sera acheminée jusqu'à la portion intérieure des paliers 36 via les deuxièmes orifices d'injection 38b. Ici aussi, la deuxième circulation d'huile 20b est donc continue depuis la deuxième pompe 44b de la deuxième alimentation en huile 43b jusqu'aux deuxièmes orifices d'injection 38b. On comprend ainsi naturellement que, dans la mesure où cette deuxième circulation d'huile ne possède aucune interruption, notamment à l'interface entre le rotor et le stator, la deuxième circulation d'huile 20b reste sous pression jusqu'aux orifices d'injection 38b, cette pression d'injection restant sensiblement la même que celle imposée par la deuxième pompe 44b aux pertes de charge près.

L'ensemble de réduction 3 comprend en outre un calculateur 80 qui contrôle les première et deuxième pompes 44a et 44b pour régler la pression d'huile dans les première et deuxième circulations d'huile 20a, 20b. L'ensemble de réduction 3 comprend de plus un dispositif de mesure 81 de la vitesse de rotation du porte-satellite 35 : ce dispositif de mesure comprend un capteur inductif et une roue phonique montée sur l'arbre de soufflante 2a, accouplée au porte-satellite 35. Chaque passage d'une des dents de la roue phonique devant le capteur inductif induit une force électromotrice dans le capteur inductif qui, en analysant le signal de sortie du capteur, permet de mesurer la vitesse de rotation de l'arbre 2a et donc du porte-satellite 35.

Afin de compenser le gradient de pression centrifuge Gc normalement présent dans le film d'huile du palier 36 lorsque le porte-satellite 35 tourne, le calculateur 80 règle les pressions des première et deuxième circulations d'huile 20a et 20b de manière à introduire un différentiel de pression d'injection entre les premiers orifices d'injection 38a et les deuxièmes orifices d'injection 38b, c'est-à-dire entre la portion extérieure 36e et la portion intérieure 36i du palier 36.

Le calculateur 80 règle ce différentiel de pression d'injection en fonction de la vitesse de rotation mesurée par le dispositif de mesure en appliquant une loi de pilotage adaptée s'appuyant sur une table de calibration ou un modèle mathématique. Le pilotage s'appuie également sur une boucle de rétroaction se basant sur les mesures de pression dans les première et deuxième circulations 20a, 20b effectuée par des capteurs 82a, 82b de pression et/ou de débit.

Ainsi, le différentiel de pression d'injection sera nul ou quasi-nul lorsque le réducteur est à l'arrêt et sera d'autant plus important que le porte-satellite tourne plus vite.

Grâce à une tel ensemble de transmission et à une telle loi de pilotage, il est possible de compenser sensiblement le gradient de pression centrifuge Gc, ce qui permet d'obtenir une distribution du champ de pression proche du cas idéal représenté à la FIG 4 dans lequel la distribution du champ de pression C' est symétrique par rapport au plan orthoradial, c'est-à-dire par rapport à la direction d'entraînement.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé. En particulier, sauf précision contraire, une caractéristique décrite en relation avec un mode ou exemple de réalisation peut être appliquée de manière analogue à un autre mode ou exemple de réalisation.

## Revendications

1. Ensemble de transmission comprenant un organe de transmission (30) et un système de distribution d'huile (50) configurés pour être logés dans un carter (40) muni d'au moins une alimentation en huile (43a),
dans lequel l'organe de transmission (30) comprend au moins un pivot tournant (34), apte à tourner autour d'un axe de rotation (R), et une partie pivotante (33), apte à pivoter autour du pivot tournant (34),
dans lequel le système de distribution d'huile (50) est configuré pour recevoir de l'huile sous pression depuis l'alimentation en huile (43a) et pour la transférer à au moins une chambre de réception d'huile (37a) du pivot tournant (34), **caractérisé en ce que** ledit pivot tournant (34) comprend une première chambre de réception d'huile (37a), en communication fluidique avec une portion extérieure (36e), dirigée à l'opposé de l'axe de rotation (R), de l'interstice (36) séparant le pivot tournant (34) et la partie pivotante (33) par au moins un premier orifice d'injection (38a), et une deuxième chambre de réception d'huile (37b), distincte de la première chambre de réception d'huile (37a), en communication fluidique avec une portion intérieure (36i), dirigée vers l'axe de rotation (R), de l'interstice (36) par au moins un deuxième orifice d'injection (38b), de manière à former un palier fluide, et **en ce que** l'ensemble de transmission (3) est apte à injecter de l'huile dans ledit interstice (36) à une première pression d'injection au niveau de la portion extérieure (36e) de l'interstice (36), et à une deuxième pression d'injection au niveau de la portion intérieure (36i) de l'interstice (36), la deuxième pression d'injection étant différente de la première pression d'injection, l'ensemble de transmission comprenant une première circulation d'huile (20a) débouchant par au moins le premier orifice d'injection (38a) au niveau de la portion extérieure de l'interstice (36e), et une deuxième circulation d'huile (20b), distincte de la première circulation d'huile (20a), débouchant par au moins le deuxième orifice d'injection (38b) au niveau de la portion intérieure de l'interstice (36i).

2. Ensemble selon la revendication 1, dans lequel la deuxième pression d'injection est supérieure à la première pression d'injection.

3. Ensemble selon la revendication 1 ou 2, comprenant en outre un calculateur (80) configuré pour régler la pression de la première et/ou de la deuxième circulation (20a, 20b) de fluide en fonction de la vitesse de rotation du pivot tournant (34) autour de l'axe de rotation (R).

4. Ensemble selon la revendication 3, dans lequel le calculateur (80) est configuré pour suivre une loi de pilotage selon laquelle la différence de pression entre les première et deuxième pressions d'injection compense au moins à 70% la différence de pression de l'huile entre les portions intérieure et extérieure de l'interstice (36i, 36e) causée par les forces volumiques centrifuges lors de la rotation du pivot tournant (34).

5. Ensemble selon l'une quelconque des revendications 1 à 4, comprenant une première alimentation en huile (43a), mise sous pression par une première pompe (44a) et alimentant la première circulation d'huile (20a), et une deuxième alimentation en huile (43b), mise sous pression par une deuxième pompe (44b) et alimentant la deuxième circulation d'huile (20b).

6. Ensemble selon la revendication 5, dans lequel le système de distribution d'huile (50) comprend une partie tournante (51) comportant une première chambre de transfert d'huile (54a) munie d'au moins un premier orifice d'alimentation (59a) configurée pour recevoir de l'huile depuis la première alimentation en huile (43a), et une deuxième chambre de transfert d'huile (54b) munie d'au moins un deuxième orifice d'alimentation (59b) configurée pour recevoir de l'huile depuis la deuxième alimentation en huile (43b),
comprenant en outre un premier conduit de liaison (70a) mettant en communication fluidique la première chambre de transfert d'huile (54a) et la première chambre de réception d'huile (37a), et un deuxième conduit de liaison (70b) mettant en communication fluidique la deuxième chambre de transfert d'huile (54b) et la deuxième chambre de réception d'huile (37b).

7. Ensemble selon l'une quelconque des revendications 1 à 6, dans lequel le pivot tournant comprend une pluralité de premiers orifices d'injection disposés symétriquement de part et d'autre du plan passant par l'axe (P) du pivot tournant (34) et par l'axe de rotation (R) du pivot tournant (34).

8. Ensemble selon l'une quelconque des revendications 1 à 7, dans lequel le pivot tournant (34) comprend des orifices d'injection (38a, 38b) possédant des sections de passage différentes.

9. Ensemble selon l'une quelconque des revendications 1 à 8, dans lequel l'organe de transmission est un réducteur de vitesse du type train épicycloïdal (30) comportant un porte-satellite (35), et
dans lequel ledit porte-satellite (35) possède une pluralité de fusées (34), formant pivots tournants, portant chacune un pignon satellite (33), formant partie pivotante.

10. Turbomachine comprenant un ensemble de transmission (30) selon l'une quelconque des revendications précédentes.

## Patentansprüche

1. Übertragungsanordnung, umfassend ein Übertragungsorgan (30) und ein Ölverteilersystem (50), die dazu ausgebildet sind, in einem mit wenigstens einer Ölzuführung (43a) ausgestatteten Gehäuse (40) aufgenommen zu werden,
wobei das Übertragungsorgan (30) wenigstens einen Drehzapfen (34), welcher geeignet ist, sich um eine Rotationsachse (R) zu drehen, und einen Schwenkteil (33), welcher geeignet ist, um den Drehzapfen (34) herum zu schwenken, umfasst,
wobei das Ölverteilersystem (50) dazu ausgebildet ist, unter Druck stehendes Öl von der Ölzuführung (43a) aufzunehmen und es an wenigstens eine Ölaufnahmekammer (37a) des Drehzapfens (34) zu überführen,
**dadurch gekennzeichnet, dass** der Drehzapfen (34) eine erste Ölaufnahmekammer (37a), welche mit einem entgegengesetzt zur Rotationsachse (R) gerichteten Außenabschnitt (36e) des den Drehzapfen (34) und den Schwenkteil (33) trennenden Zwischenraums (36) durch wenigstens eine erste Einspritzöffnung (38a) in Fluidverbindung steht, sowie eine von der ersten Ölaufnahmekammer (37a) getrennte zweite Ölaufnahmekammer (37b) umfasst, welche mit einem in Richtung der Rotationsachse (R) gerichteten Innenabschnitt (36i) des Zwischenraums (36) durch wenigstens eine zweite Einspritzöffnung (38b) in Fluidverbindung steht, um ein Flüssigkeitslager zu bilden,
und dass die Übertragungsanordnung (3) geeignet ist, Öl in den Zwischenraum (36) mit einem ersten Einspritzdruck im Bereich des Außenabschnitts (36e) des Zwischenraums (36) und mit einem zweiten Einspritzdruck im Bereich des Innenabschnitts (36i) des Zwischenraums (36) einzuspritzen, wobei der zweite Einspritzdruck von dem ersten Einspritzdruck verschieden ist, wobei die Übertragungsanordnung einen ersten Ölkreis (20a), welcher über wenigstens die erste Einspritzöffnung (38a) im Bereich des Außenabschnitts des Zwischenraums (36e) ausmündet, sowie einen von dem ersten Ölkreis (20a) getrennten zweiten Ölkreis (20b), welcher über wenigstens die zweite Einspritzöffnung (38b) im Bereich des Innenabschnitts des Zwischenraums (36i) ausmündet, umfasst.

2. Anordnung nach Anspruch 1, bei der der zweite Einspritzdruck höher als der erste Einspritzdruck ist.

3. Anordnung nach Anspruch 1 oder 2, ferner umfassend einen Rechner (80), der dazu ausgebildet ist, den Druck des ersten und/oder des zweiten Fluidkreises (20a, 20b) in Abhängigkeit von der Rotationsgeschwindigkeit des Drehzapfens (34) um die Rotationsachse (R) einzustellen.

4. Anordnung nach Anspruch 3, bei der der Rechner (80) dazu ausgebildet ist, ein Steuergesetz zu befolgen, wonach der Druckunterschied zwischen dem ersten und dem zweiten Einspritzdruck den Druckunterschied des Öls zwischen dem Innen- und dem Außenabschnitt des Zwischenraums (36i, 36e), welcher durch die Zentrifugalvolumenkräfte während der Rotation des Drehzapfens (34) verursacht wird, wenigstens zu 70 % kompensiert.

5. Anordnung nach einem der Ansprüche 1 bis 4, umfassend eine erste Ölzuführung (43a), welche durch eine erste Pumpe (44a) mit Druck beaufschlagt wird und den ersten Ölkreis (20a) versorgt, sowie eine zweite Ölzuführung (43b), welche durch eine zweite Pumpe (44b) mit Druck beaufschlagt wird und den zweiten Ölkreis (20b) versorgt.

6. Anordnung nach Anspruch 5, bei der das Ölverteilersystem (50) einen umlaufenden Teil (51) aufweist, der eine mit wenigstens einer ersten Zuführöffnung (59a) ausgestattete erste Ölüberführungskammer (54a), die dazu ausgebildet ist, Öl von der ersten Ölzuführung (43a) aufzunehmen, sowie eine mit wenigstens einer zweiten Zuführöffnung (59b) ausgestattete zweite Ölüberführungskammer (54b), die dazu ausgebildet ist, Öl von der zweiten Ölzuführung (43b) aufzunehmen, umfasst,
ferner umfassend eine erste Verbindungsleitung (70a), welche die erste Ölüberführungskammer (54a) und die erste Ölaufnahmekammer (37a) in Fluidverbindung bringt, sowie eine zweite Verbindungsleitung (70b), welche die zweite Ölüberführungskammer (54b) und die zweite Ölaufnahmekammer (37b) in Fluidverbindung bringt.

7. Anordnung nach einem der Ansprüche 1 bis 6, bei der der Drehzapfen eine Vielzahl von ersten Einspritzöffnungen umfasst, die auf beiden Seiten der Ebene, welche durch die Achse (P) des Drehzapfens (34) und durch die Rotationsachse (R) des Drehzapfens (34) verläuft, symmetrisch angeordnet sind.

8. Anordnung nach einem der Ansprüche 1 bis 7, bei der der Drehzapfen (34) Einspritzöffnungen (38a, 38b), die unterschiedliche Durchlassquerschnitte besitzen, umfasst.

9. Anordnung nach einem der Ansprüche 1 bis 8, bei der das Übertragungsorgan ein Untersetzungsgetriebe vom Typ Planetengetriebe (30) mit einem Planetenträger (35) ist, und
bei der der Planetenträger (35) eine Vielzahl von Drehzapfen bildenden Schenkeln (34) besitzt, die jeweils ein einen Schwenkteil bildendes Planetenrad (33) tragen.

10. Turbomaschine, die eine Übertragungsanordnung (30) nach einem der vorhergehenden Ansprüche umfasst.

## Claims

1. A transmission assembly comprising a transmission member (30) and an oil distribution system (50) suitable to be housed in a casing (40) having at least one oil feed (43a);
wherein the transmission member (30) includes at least one rotary pivot (34) suitable for turning about an axis of rotation (R), and a pivot portion (33) suitable for pivoting about the rotary pivot (34);
wherein the oil distribution system (50) is configured to receive oil under pressure from the oil feed (43a) and to transfer it to at least one oil reception chamber (37a) of the rotary pivot (34);
**characterized in that** said rotary pivot (34) includes a first oil reception chamber (37a) in fluid flow communication with an outer portion (36e), of the gap (36) between the rotary pivot (34) and the pivot portion (33) facing away from the axis of rotation (R) via at least one first injection orifice (38a), and a second oil reception chamber (37b), distinct from the first oil reception chamber (37a), in fluid flow communication with an inner portion (36i), of the gap (36) facing the axis of rotation (R) via at least one second injection orifice (38b), so as to form a fluid bearing; and
**characterized in that** the transmission assembly (3) is suitable for injecting oil into said gap (36) at a first injection pressure into the outer portion (36e) of the gap (36), and at a second injection pressure into the inner portion (36i) of the gap (36) facing towards the axis of rotation (R), the second injection pressure being different from the first injection pressure, the transmission assembly comprising both a first oil flow path (20a) opening via at least the first injection orifice (38a) into the outer portion of the gap (36e), and a second oil flow path (20b), distinct from the first oil flow path (20a), opening via at least the second injection orifice (38b) into the inner portion of the gap (36i) .

2. An assembly according to claim 1, wherein the second injection pressure is greater than the first injection pressure.

3. An assembly according to claim 1 or claim 2, further including a computer (80) configured to adjust the pressure of the first and/or second fluid flow paths (20a, 20b) as a function of the speed of rotation of the rotary pivot (34) about the axis of rotation (R).

4. An assembly according to claim 3, wherein the computer (80) is configured to apply a control relationship whereby the pressure difference between the first and second injection pressures compensates at least 70% of the oil pressure difference between the inner and outer portions (36i, 36e) of the gap as caused by centrifugal volume forces during rotation of the rotary pivot (34).

5. An assembly according to any one of claims 1 to 4, having a first oil feed (43a) put under pressure by a first pump (44a) and feeding the first flow path (20a), and a second oil feed (43b) put under pressure by a second pump (44b) and feeding the second oil flow path (20b) .

6. An assembly according to claim 5, wherein the oil distribution system (50) comprises a rotary portion (51) having a first oil transfer chamber (54a) provided with at least one first feed orifice (59a) configured to receive oil from the first oil feed (43a), and a second oil transfer chamber (54b) provided with at least one second feed orifice (59b) configured to receive oil from the second oil feed (43b);
further comprising a first connection duct (70a) putting the first oil transfer chamber (54a) into fluid flow communication with the first oil reception chamber (37a), and a second connection duct (70b) putting the second oil transfer chamber (54b) into fluid flow communication with the second oil reception chamber (37b) .

7. An assembly according to any one of claims 1 to 6, wherein the rotary pivot has a plurality of first injection orifices arranged symmetrically on either side of the plane containing the pivot axis (P) of the rotary pivot (34) and the axis of rotation (R) of the rotary pivot (34).

8. An assembly according to any one of claims 1 to 7, wherein the rotary pivot (34) includes injection orifices (38a, 38b) possessing flow sections that are different.

9. An assembly according to any one of claims 1 to 8, wherein the transmission member is a speed-reduction gear (30) of the epicyclic gear train type including a planet carrier (35); and
wherein said planet carrier (35) possesses a plurality of spindles (34) constituting rotary pivots, each carrying a planet gear (33) forming a pivot portion.

10. A turbine engine including a transmission assembly (30) according to any preceding claim.
